# FASCICULE DE BREVET EUROPEEN

(11) **EP 0 848 470 B1**
(45) Date de publication et mention de la délivrance du brevet: **12.04.2000**
(21) Numéro de dépôt: 97403016.5
(22) Date de dépôt: 11.12.1997
(51) Int. Cl.: H02G 3/12

(54) **Goulotte de distribution électrique et utilisation d'une telle goulotte**
Kanal für elektrische Anlage und Verwendung
Electrical distribution raceway and use

(30) Priorité: 13.12.1996 FR 9615381
(43) Date de publication de la demande: 17.06.1998
(73) Titulaire: INFRA +, 94242 L'Hay les Roses (FR)
(72) Inventeur: Nozick, Jacques, 75005 Paris (FR)
(74) Mandataire: CAPRI SARL

(56) Documents cités:
- DE-A- 3 643 559
- DE-A- 3 708 357
- DE-U- 7 910 072

## Description

La présente invention concerne une goulotte de distribution électrique dont on se sert dans l'équipement électrique de bâtiments pour réaliser des plinthes ou des perches de distribution. Ces plinthes ou ces perches permettent le passage de câbles et le montage d'appareillages électriques tels que des prises, des disjoncteurs ou d'autres équipements électriques.

Ce type de goulotte de câblage ou de distribution comporte en général au moins un rail de support servant de passage de câble. Ce rail est pourvu d'une ouverture sur toute sa longueur permettant un accès direct à l'intérieur du rail. Pour fermer le rail, il est prévu un couvercle en général encliquetable dans l'ouverture du rail. De manière schématique, le rail forme un canal en forme de U obturable à l'aide du couvercle encliquetable.

Il existe dans l'art antérieur plusieurs types de goulottes qui peuvent être réalisées en aluminium ou en PVC. De manière classique, l'appareillage électrique qui se compose la plupart du temps de prises électriques est monté sur un plastron. Dans certains cas, le plastron est encliquetable sur le rail, mais il existe aussi encore d'autres versions où l'appareillage est directement fixé au fond de la goulotte. Une telle goulotte est notamment décrite dans le document DE-37 08 357 : les prises et autres appareillages sont montés sur un appendice de fixation solidaire du fond du rail. Le rail est ensuite obturé par des éléments de couvercle. En somme, l'appareillage électrique (prises) n'est pas encliqueté sur le rail. Dans le cas des plastrons susmentionnés, il en est de même, puisqu'il est monté sur le plastron que l'on vient rapporter sur le rail.

Un autre modèle de goulotte prévoit d'encliqueter directement l'appareillage électrique (prises) sur le rail de la goulotte et d'obturer le restant du rail avec des éléments de couvercle. Toutefois, dans ce modèle de goulotte, on a constaté que l'encliquetage de l'appareillage électrique n'était pas suffisamment résistant lorsque plusieurs appareillages électriques sont disposés côte à côte. En effet, lorsque une rangée de plusieurs appareillages électriques est encliquetée dans un rail, la force globale d'encliquetage des différents appareillages électriques a pour effet d'élargir l'ouverture du rail et ainsi de diminuer la résistance à la traction. Or, en particulier lorsqu'il s'agit de prises électriques, celles-ci doivent résister à une certaine traction qui est exercée lors du retrait de la fiche de l'intérieur de la prise. Ce problème de la diminution de la résistance à la traction se manifeste de manière plus remarquée lorsque la goulotte est réalisée en PVC, qui est tout de même un matériau plus souple en comparaison de l'aluminium.

Le but de la présente invention est de pallier les inconvénients de l'art antérieur en définissant une goulotte de distribution en aluminium mais également en PVC dans laquelle l'appareillage électrique (prise) est encliqueté directement dans la goulotte et dont la résistance à la traction est amplement suffisante même en cas d'un montage de rangée comprenant plusieurs appareillages électriques. La goulotte selon l'invention a également pour but d'effacer toute différence de résistance et de solidité entre une goulotte en aluminium et une goulotte en PVC.

Pour ce faire, la présente invention prévoit une goulotte de distribution électrique comportant :
- un rail de support servant de passage de câble et pourvu d'une ouverture longitudinale permettant un accès à l'intérieur de la goulotte,
- au moins un élément de couvercle encliquetable dans l'ouverture longitudinale pour obturer ledit rail,
caractérisée en ce que, en combinaison
- l'ouverture longitudinale du rail de support reçoit directement par encliquetage des appareillages électriques, tels que des prises, et
- ledit rail comporte des moyens de retenue coopérant avec ledit au moins un élément de couvercle encliqueté pour empêcher un élargissement de l'ouverture longitudinale, interdisant ainsi l'extraction accidentelle d'un appareillage électrique hors de l'ouverture longitudinale par traction sur celui-ci.

Ainsi, les éléments de couvercle remplissent la fonction d'entretoises pour les deux branches du rail de support, ce qui aide à pallier le manque de résistance des branches du rail, particulièrement lorsque celui-ci est réalisé en PVC. Etant donné que les branches du rail sont maintenues avec un écartement constant, l'encliquetage de l'appareillage électrique est de meilleure qualité et peut donc résister à une force de traction supérieure. Il est à noter que cette résistance accrue à la traction est obtenue sans ajout d'une pièce additionnelle, puisqu'elle est directement obtenue par les éléments de couvercle eux-mêmes. Par rapport à une goulotte de l'art antérieur utilisant un plastron ou un appendice de fixation, on économise également une pièce.

Avantageusement, les appareillages électriques sont pourvus de moyens d'encliquetage, tels que des pattes d'encliquetage, coopérant avec les moyens de retenue du rail pour recevoir par encliquetage les appareillages électriques dans l'ouverture longitudinale du rail. Ainsi, les mêmes éléments du rail sont utilisés à la fois pour l'encliquetage des prises et des éléments de couvercle.

De préférence, ledit au moins un élément de couvercle présente sensiblement la même largeur que les appareillages électriques. En ne prévoyant qu'une largeur unique, on standardise ainsi les goulottes de distribution et l'on peut par conséquent se passer de toute une gamme complexe d'accessoires de diverses dimensions tels que les plastrons précédemment décrits en relation avec l'art antérieur.

Selon une autre caractéristique, les appareillages électriques présentent chacun une face avant et les éléments de couvercle définissent chacun une plaque de couvercle, les faces avant des appareillages électriques et les plaques de couvercle des éléments de couvercle étant situées dans un même plan. Les prises et les éléments de couvercle sont donc parfaitement alignés dans l'ouverture du rai.

Selon une forme de réalisation pratique, ledit au moins un élément de couvercle comprend des pattes d'encliquetage résilientes coopérant avec des brides d'encliquetage solidaires du rail de support.

En outre, les moyens de retenue comprennent des brides de retenue coopérant avec des pattes de retenue rigides solidaires dudit au moins un élément de couvercle.

De préférence, les brides d'encliquetage et de retenue sont les mêmes. Ainsi, les brides remplissent une double fonction en coopération respective avec les pattes d'encliquetage et les pattes de retenue de l'élément de couvercle.

En outre, les pattes de retenue viennent en butée verticale sur les brides d'encliquetage et de retenue pour limiter l'enfoncement dudit au moins un élément de couvercle dans ledit rail de support. Ainsi, les brides remplissent une triple fonction.

Selon une autre caractéristique de l'invention, le rail de support présente un fond ayant un profil permettant un encliquetage dans l'ouverture longitudinale d'un autre rail de support. On peut ainsi emboîter plusieurs rails les uns sur les autres de manière à constituer une goulotte multiple. Cette caractéristique est particulièrement intéressante lorsque la goulotte est utilisée en tant que perche de distribution de manière à pouvoir réalise des perches double face sur lesquelles les appareillages électriques (prises) sont disposées sur deux faces de la perche. Dans ce cas, la goulotte porteuse sera dotée d'un fond sur lequel une autre goulotte pourra être encliquetée.

Le rail de support peut être être réalisé en aluminium ou en PVC. Il en est de même pour l'élément de couvercle, de sorte que l'on pourra avoir une goulotte en aluminium avec une couvercle en PVC ou encore une goulotte en PVC avec un couvercle en aluminium.

L'invention sera maintenant décrite en référence des dessins joints donnant à titre d'exemple non limitatif plusieurs modes de réalisation de la présente invention. Sur les dessins :
- la figure 1A est une vue en coupe transversale à travers une goulotte de distribution recevant un élément de couvercle selon une première forme de réalisation ;
- la figure 1B est une vue en coupe transversale à travers une goulotte de distribution de la figure 1A recevant un appareillage électrique ;
- la figure 2 est une vue en coupe transversale à travers une goulotte de distribution selon une deuxième forme de réalisation en tant que plinthe de distribution ;
- les figures 3a et 3b représentent une goulotte de distribution selon une troisième forme de réalisation utilisé en tant que perche de distribution.

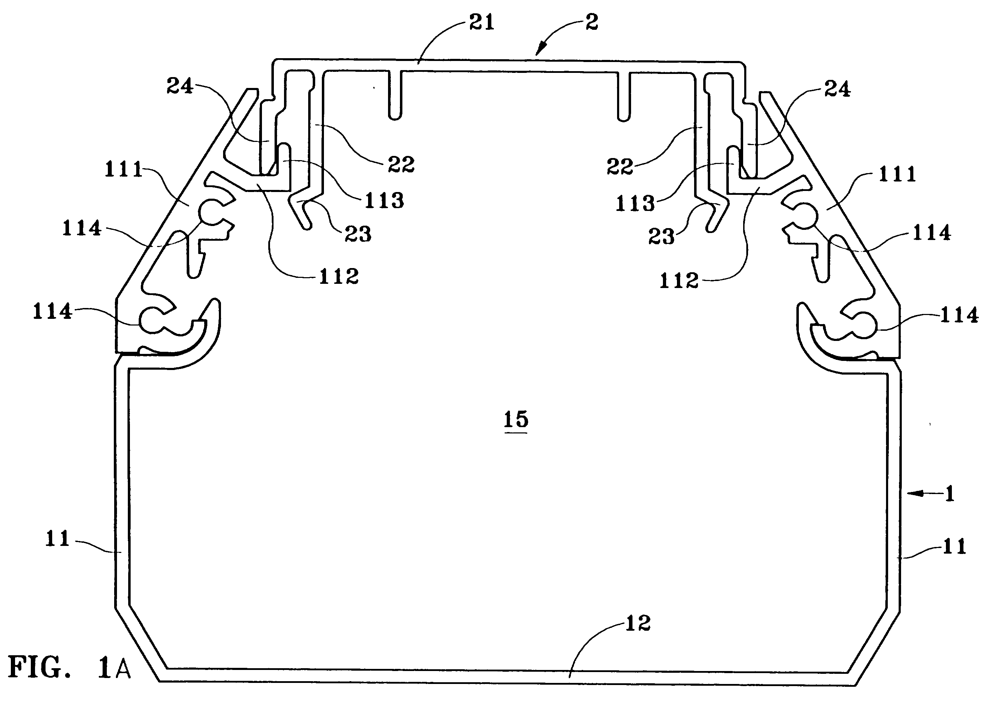

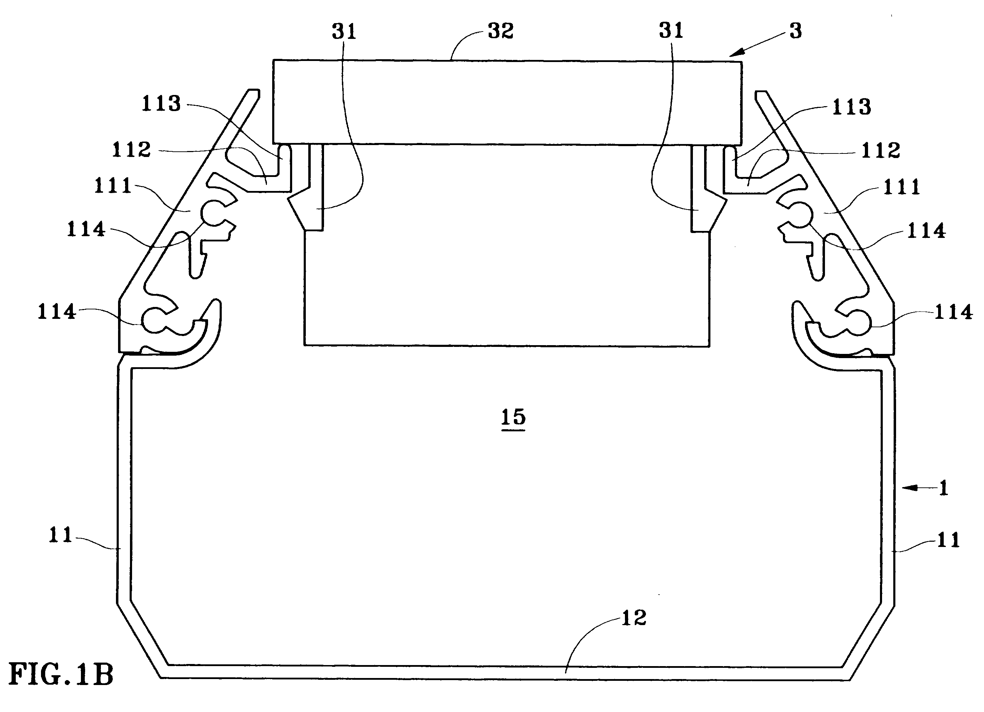

On se référera tout d'abord aux figures 1A et 1B qui représentent une goulotte de distribution selon l'invention qui peut être utilisée soit en tant que plinthe horizontale, soit en tant que perche verticale. Cette goulotte comprend essentiellement trois éléments constitutifs, à savoir un rail de support désigné dans son ensemble par la référence numérique 1 un élément de couvercle désigné dans son ensemble par la référence numérique 2 et un ou plusieurs appareillages électriques 3. Le rail et l'élément de couvercle définissent ensemble à l'état monté un espace intérieur 15 qui n'est accessible que lorsque l'élément de couvercle est retiré du rail de support 1. Cet espace intérieur 15 est destiné à accueillir divers appareillages électriques, tels que des prises, des disjoncteurs ou d'autres équipements électriques, mais sert également en tant que passage de câble pour relier l'appareillage électrique à un plancher ou à un plafond technique.

Le rail de support 1 présente une section sensiblement en forme de U avec un fond 12 et deux branches latérales 11. Le fond 12 est destiné à être fixé au mur lorsque la goulotte de distribution est utilisée en tant que plinthe, de sorte que l'ouverture longitudinale du rail de support 1 est orientée horizontalement à proximité du sol. Chaque branche latérale 11 se prolonge par des appendices 111 qui incorporent des alésages ouverts 114 pour la fixation de flasques de fermeture à l'aide de vis que l'on vient visser de manière autotaraudante dans les alésages 114. Selon l'invention, ces appendices 111 comprennent avantageusement une bride 112 qui s'étend sensiblement perpendiculairement à l'appendice 111 et qui se termine par un rabat 113 qui est orientée sensiblement parallèlement aux branches 11 du rail de support 1. Les brides 112 et les rabats 113 forment ainsi ensemble une sorte de rigole longitudinale ayant une section transversale en forme de crochets. Selon l'invention, l'écartement entre les deux rabats 113 est tel qu'il permet un encliquetage direct d'appareillages électriques, en particulier de prises dont les dimensions sont standard. Comme on peut le voir sur la figure 1B, il est donc possible de rapporter par encliquetage les prises sans avoir à utiliser un équipement quelconque tel qu'un plastron. De manière conventionnelle, les prises 3 sont dotées de pattes élastiques d'encliquetage 31, qui dans la goulotte de distribution électrique selon l'invention viennent s'encliqueter entre les rabats 113, de sorte que la majeure partie de la prise est introduite dans l'espace intérieur 15 du rail de support 1 en ne laissant que la face avant 31 de la prise visible. Ainsi, les rabats 113 servent de surface d'encliquetage pour l'appareillage électrique. Les brides 112 avec leurs rabats 113 remplissent selon l'invention deux autres fonctions supplémentaires qui seront expliquées ci-après en référence à la description de l'élément de couvercle 2.

En référence à la figure 1A, l'élément de couvercle 2 comprend une plaque de couvercle 21 dont la largeur est sensiblement égale à l'écartement entre les rabats 113 du rail de support 1. La plaque de couvercle 21 obture ainsi l'ouverture longitudinale du rail de support 1. La plaque de couvercle 21 est pourvue sur sa face inférieure de pattes d'encliquetage 22 qui se terminent par un profil d'encliquetage 23 destiné à venir en prise en-dessous des rabats 113 du rail de support 1. En effet, comme on peut le voir sur la figure 1, chaque languette d'encliquetage 22 s'étend sensiblement perpendiculairement à la plaque de couvercle 21 à proximité des rabats 113 de sorte que les profils d'encliquetage 23 présentent un écartement légèrement supérieur à celui des rabats 113. Ainsi, du fait que les pattes d'encliquetage 22 sont élastiques et résilientes, les profils d'encliquetage 23 peuvent être ramenés l'un vers l'autre par appui sur les rabats 113 de manière à faire passer les profils d'encliquetage 23 entre les rabats 113. Les languettes d'encliquetage 22 présentent une longueur suffisante pour permettre aux profils d'encliquetage 23 de venir en dessous des rabats 113 à l'intérieur de l'espace 15. Dans le position représentée sur la figure 1, le couvercle 2 est dans son état monté avec les profils d'encliquetage 23 des pattes 22 encliquetées en dessous des rabats 113.

La plaque de couvercle 21 comprend également à chacun de ses bords longitudinaux une languette 24 rigide qui confère au couvercle 2 une section transversale sensiblement en forme de U. Les pattes 24 s'étendent vers le bas sensiblement parallèlement aux pattes d'encliquetage 22 avec un écartement légèrement supérieur à celui des rabats 113 des brides 112. Dans la position encliquetée représentée sur la figure 1, les pattes 24 sont engagées dans la rigole longitudinale formée par la bride 112. Les pattes 24 présentent un double contact avec la rigole, d'une part avec leur extrémité inférieure contre la bride 112, et d'autre part avec leur surface intérieure contre le rabat 113. Le contact des extrémités inférieures de la patte 24 avec la bride 112 a pour fonction de limiter l'enfoncement de l'élément de couvercle dans le rail de support 1. D'autre part, le contact de la surface intérieure de la patte 24 avec le rabat 113 a pour fonction d'empêcher un élargissement de l'ouverture longitudinale du rail de support 1. Cette dernière caractéristique est particulièrement avantageuse lorsque le rail de support est réalisé en PVC c'est-à-dire en un matériau qui présente une certaine souplesse. En effet, dans ce cas, l'élément de couvercle 2 avec ses pattes 24 sert d'entretoise en empêchant tout élargissement de l'ouverture longitudinale du rail de support 1. Un rail de support 1 réalisé en PVC a tendance à subir un tel élargissement lorsque plusieurs appareillages (prises électriques 3) sont encliquetées les unes à côté des autres. Dans le rail de support 1, une accumulation de prises électriques encliquetées dans un rail de support en PVC a pour effet de déformer élastiquement les branches 111 en éloignement l'une de l'autre, ce qui a pour conséquence de diminuer la résistance à la traction sur les prises électriques. Grâce aux rails de support et au couvercle de l'invention, il est possible de calibrer l'écartement des branches 11 du rail 1 en disposant de manière plus ou moins régulière de sections d'éléments de couvercle entre les groupes de prises électriques. On assure ainsi que l'écartement entre les brides 112 est toujours constant, ce qui permet de maintenir une résistance à la traction suffisante.

L'élément de couvercle 2 en coopération avec le rail de support 1 remplit ainsi une triple fonction. Les pattes 22 en coopération avec les rabats 113 des brides 112 servent à l'encliquetage de l'élément de couvercle. D'autre part, les pattes 24 de l'élément de couvercle 2 servent de limitation à l'enfoncement et de retenue en coopération avec la bride 112. La patte 22 est donc une patte d'encliquetage, la patte 24 est donc une patte de retenue et de limitation à l'enfoncement, et la bride 112 avec son rabat 113 est une patte d'encliquetage, de retenue et de limitation à l'enfoncement.

En outre, il est à remarquer que les prises et les éléments de couvercle présentent non seulement la même largeur, mais également la même épaisseur saillante hors du rail, de sorte que la surface extérieure de la plaque de couvercle 21 est située dans le même plan que la face avant 32 de la prise. Cela signifie que les prises et les éléments de couvercle définissent ensemble une surface plane continue et de ce fait esthétique.

Grâce à l'invention, il est possible de réaliser des goulottes de distribution avec des matériaux présentant une certaine souplesse, tel que du PVC. Il est possible de réaliser l'élément de couvercle 2 et le rail de support 1 tous deux en PVC, mais il est également possible de réaliser l'élément de couvercle 2 en PVC et le rail de support 1 en aluminium ou vice-versa. La goulotte de distribution électrique selon l'invention peut également être réalisée entièrement en aluminium.

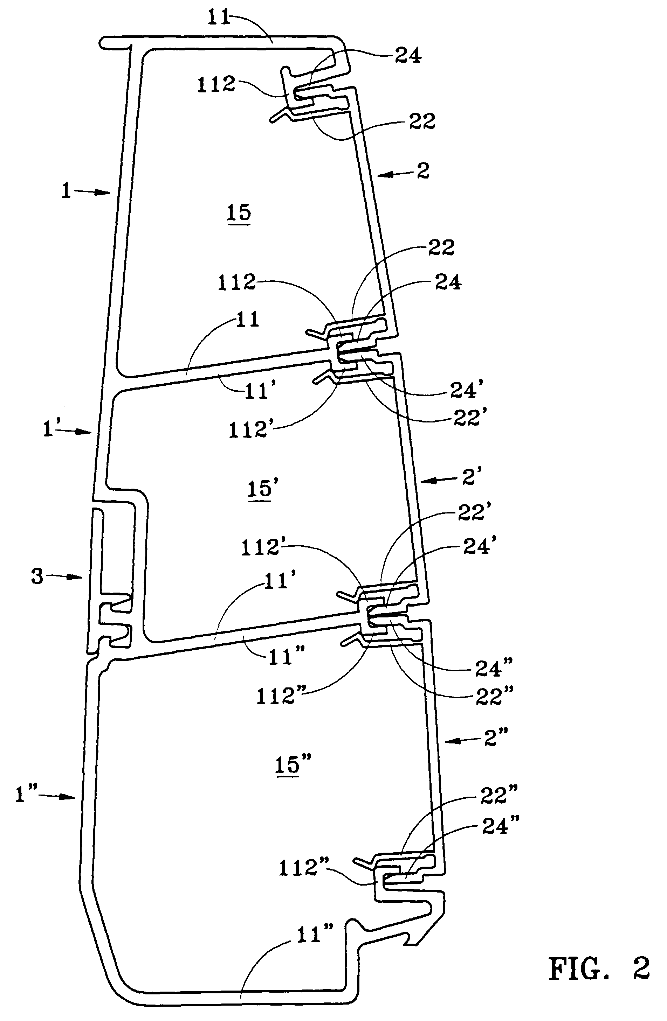

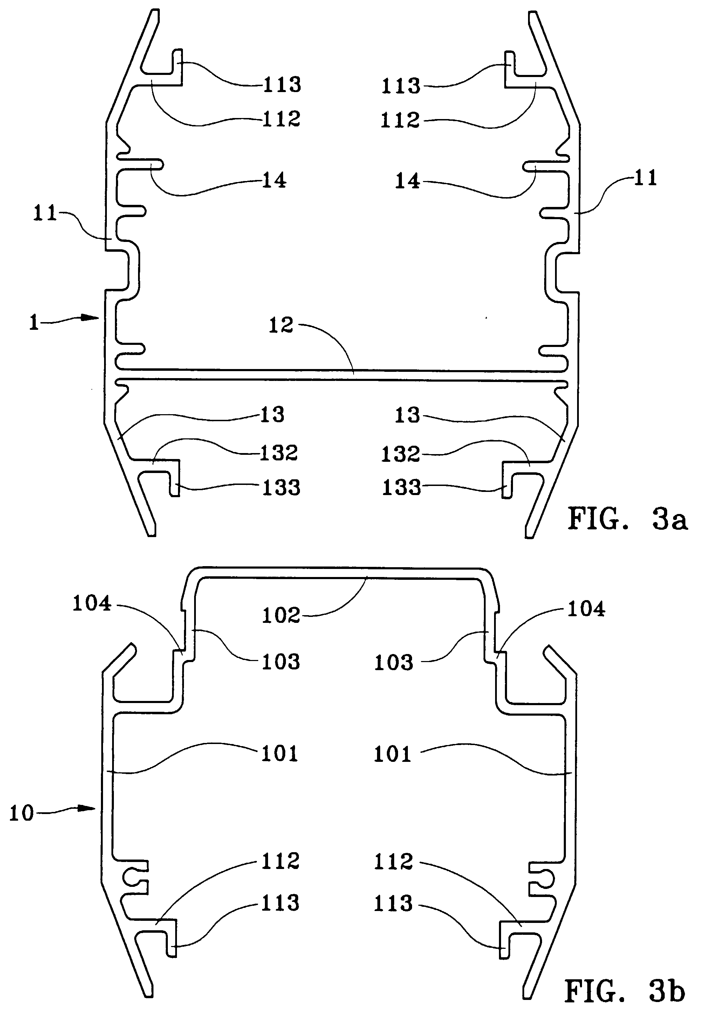

Les figures 2 et 3 représentent des goulottes de distribution selon l'invention, utilisées respectivement en tant que plinthe de distribution et perche de distribution. En se référant d'abord à la figure 2, on voit que la plinthe de distribution comporte trois goulottes de distribution électriques 1, 1' et 1". Les trois goulottes électriques sont disposées les unes au-dessus des autres avec la goulotte 1 en position supérieure et la goulotte 1" en position inférieure. Les trois rails de support 1, 1' et 1" de la plinthe sont réalisés de manière monobloc par filage d'aluminium ou par moulage de PVC. Les trois espaces intérieurs 15, 15' et 15" des trois goulottes sont différents, comme on peut le voir sur la figure 2. Cependant, les ouvertures longitudinales, et en particulier l'écartement entre les brides 112 sont identiques pour les trois goulottes de sorte que des éléments de couvercle identiques peuvent être utilisés pour les trois rails de support 1, 1' et 1". Les éléments de couvercle utilisés 2 sont identiques à ceux de la figure 1, et comprennent donc des pattes d'encliquetage 22 et des pattes de retenue et de limitation 24. De même, la branche latérale 11 du rail de support 1 comprend une bride d'encliquetage et de retenue 112 qui coopère avec la patte d'encliquetage 22 et la patte de retenue 24 de l'élément de couvercle 2. En outre, étant donné que les trois goulottes sont disposées de manière adjacente l'une à l'autre, la branche latérale 11 du rail 1 forme également la branche latérale 11' du rail 1". Ainsi, la branche latérale 11, 11" forme une cloison de séparation entre les deux espaces intérieurs 15 et 15'. De ce fait, la branche 11, 11" est pourvue de deux brides de retenue et d'encliquetage 112, 112', qui coopèrent respectivement avec les pattes d'encliquetage 22 et les pattes de retenue 24, et les pattes d'encliquetage 22', et les pattes de retenue 24'. Il est de même pour la cloison séparant l'espace intérieur 15' et 15". Enfin, la branche 11" du dernier rail de support 1" et formée de manière similaire à la branche 11 du premier rail de support 1.

Pour la fixation de cette plinthe au mur, il est prévu un organe de fixation par encliquetage 3 que l'on vient visser au mur et sur lequel la plinthe peut être encliquetée.

Il est à remarquer que la branche latérale 11 présente une largeur inférieure à la branche latérale 11' qui elle-même présente une largeur inférieure à la branche latérale 11". Ceci implique que l'espace intérieur 15 est inférieur à l'espace intérieur 15' qui lui-même est inférieur à l'espace intérieur 15". De cette manière, on essaye de créer une illusion d'optique qui laisse à croire que la largeur de la plinthe est celle de la branche latérale supérieure 11. En réalité, on dispose d'un volume intérieur global largement supérieur à ce que laisse croire la largeur de la branche 11. On dispose ainsi d'une plinthe de distribution très esthétique qui paraît très plate, mais qui présente tout de même un volume intérieur global de travail relativement important. De plus, comme on peut le remarquer sur la figure 2, les éléments de couvercle 2, 2' et 2" sont légèrement inclinés vers le haut, ce qui facilite l'accès à l'appareillage électrique monté dans la plinthe.

En se référant maintenant aux figures 3a, et 3b, il est représenté une goulotte de distribution électrique selon l'invention, qui est réalisé pour une utilisation en tant que perche de distribution verticale. La figure 3b représente une goulotte de base pour réaliser une perche de distribution. Cette goulotte dont seulement le rail de support 1 est représenté (le couvercle ayant été omis) comprend de manière analogue aux formes de réalisation précédentes, un fond 12 et deux branches latérales 11. La conception des branches latérales 11 est quelque peu différente de celle des réalisations précédentes en ce qu'elles incorporent deux ailettes d'appui 14 qui s'étendent sensiblement perpendiculairement aux branches 11. Ces ailettes d'appui 14 forment avec les branches 11 et le fond 12 un logement partiellement refermé dans lequel on peut introduire un mât de perche (non représenté). Le mât de perche présente une section transversale rectangulaire de dimensions légèrement inférieures à celle du logement formé par les ailettes d'appui 14, les branches latérales 11 et le fond 12 du rail de support. Le mât (non représenté) sert à verrouiller la perche de distribution en position verticale en agissant tel une étai. D'autre part, de manière analogue aux réalisations précédentes, les branches latérales 11 comprennent à leurs extrémités supérieures une bride de retenue et d'encliquetage 13 formée avec son rabat 113.

Selon une autre caractéristique intéressante de l'invention, le rail de support 1 comprend en outre une deuxième paire de branches latérales 133 qui s'étend à partir du fond 12 en direction opposée aux branches latérales 11. Ces branches latérales 113 sont pourvues de bride d'encliquetage et de retenue 132 avec rabat 133 identique à celle des branches latérales 11. La seule différence entre les branches latérales 13 et les branches latérales 11 est que les branches latérales 13 forment un espace intérieur inférieur à celui des branches 11 et ne comporte pas d'ailettes d'appui 14 pour la formation d'un logement pour le mât de verrouillage. En effet, les branches latérales 13 pourvues de brides 132 servent à la réception par encliquetage d'un autre rail de support 10 qui est représenté sur la figure 3b dans une position apte à l'encliquetage entre les branches latérales 13. Ce rail de support 10 est également pourvu de brides d'encliquetage et de retenue 112 avec rabat 113 pour pouvoir remplir les mêmes fonctions en coopération avec un élément de couvercle non représenté. L'espace intérieur que définit ce rail de support 10 présente une profondeur sensiblement identique à celle du rail de support 1 de la figure 3a. En effet, le rail de support 10 est destiné à accueillir par encliquetage un appareillage électrique de nature identique à celui du rail de support 1. Une fois encliquetée dans les brides 132 du rail 1, le rail de support 10 forme avec le rail de support 1 une perche de distribution double face, en ce que l'on dispose de deux ouvertures longitudinales opposées. Pour l'encliquetage du rail de support 10 sur le rail de support 1, le rail de support 10 comporte un fond profilé 102 pourvu de logements d'encliquetage formé par des éléments de paroi 103 destinés à venir en contact avec les parois extérieures des rabats des brides d'encliquetage 132 et par des surfaces de butée 104 destinées à venir en contact avec les extrémités des rabats 133. Pour l'encliquetage du rail de support 10 dans le rail de support 1, on joue sur l'élasticité des branches latérales 13 pour amener les rabats 133 dans les logements d'encliquetage 103, 104 du rail de support 10. On peut également rapporter le rail de support 10 sur le rail de support 1 en engageant les rabats 133 du rail 1 par une des extrémités du rail de support 10.

Etant donné que les branches latérales 13 sont identiques aux extrémités des branches latérales 11, il est toujours possible d'encliqueter un rail de support 10 sur les branches latérales 11 de manière à former une perche de distribution ayant trois espaces intérieurs. Ceci peut être utile dans le cas où il est nécessaire d'augmenter le volume intérieur de la perche pour permettre un passage de câble supérieur.

Pour l'obturation des ouvertures longitudinales des rails de support 1 et 10, on utilise les mêmes éléments de couvercle que ceux représentés sur les figures 1 et 2. Grâce à cet élément de couvercle, on assure une stabilité dimentionnelle de la perche de distribution au niveau de l'écartement des branches latérales 11 et 101. Le rail de support 1 de la figure 3a sera de préférence réalisé en aluminium car il offre une résistance supérieure, alors que le rail de support 10 ainsi que les couvercles (non représentés) pourront être réalisés soit en aluminium soit en PVC.

## Revendications

1. Goulotte de distribution électrique comportant :
- un rail de support (1, 10) servant de passage de câble et pourvu d'une ouverture longitudinale permettant un accès à l'intérieur de la goulotte,
- au moins un élément de couvercle (2) encliquetable dans l'ouverture longitudinale pour obturer ledit rail,
caractérisée en ce que, en combinaison
- l'ouverture longitudinale du rail de support reçoit directement par encliquetage des appareillages électriques, tels que des prises, et
- ledit rail comporte des moyens de retenue (112, 113) coopérant avec ledit au moins un élément de couvercle encliqueté (2) pour empêcher un élargissement de l'ouverture longitudinale, interdisant ainsi l'extraction accidentelle d'un appareillage électrique (3) hors de l'ouverture longitudinale par traction sur celui-ci.

2. Goulotte de distribution selon la revendication 1, dans laquelle les appareillages électriques sont pourvus de moyens d'encliquetage, tels que des pattes d'encliquetage (31), coopérant avec les moyens de retenue (113) du rail pour recevoir par encliquetage les appareillages électriques (3) dans l'ouverture longitudinale du rail.

3. Goulotte de distribution selon la revendication 1 ou 2, dans laquelle ledit au moins un élément de couvercle présente sensiblement la même largeur que les appareillages électriques.

4. Goulotte de distribution selon l'une quelconque des revendications 1 à 3, dans laquelle les appareillages électriques présentent chacun une face avant (32) et les éléments de couvercle définissent chacun une plaque de couvercle (21), les faces avant (32) des appareillages électriques et les plaques de couvercle (21) des éléments de couvercle étant situées dans un même plan.

5. Goulotte de distribution selon l'une quelconque des revendications précédentes, dans laquelle ledit au moins un élément de couvercle comprend des pattes d'encliquetage résilientes (22) coopérant avec des brides d'encliquetage (112, 113) solidaires du rail de support.

6. Goulotte de distribution selon l'une quelconque des revendications précédentes, dans laquelle les moyens de retenue comprennent des brides de retenue (112, 113) coopérant avec des pattes de retenue rigides (24) solidaires dudit au moins un élément de couvercle.

7. Goulotte de distribution selon les revendications 5 et 6, dans laquelle les brides d'encliquetage et de retenue sont les mêmes.

8. Goulotte de distribution selon la revendication 7, dans laquelle les pattes de retenue viennent en butée verticale sur les brides d'encliquetage et de retenue pour limiter l'enfoncement dudit au moins un élément de couvercle dans ledit rail de support.

9. Goulotte de distribution selon l'une quelconque des revendications précédentes, dans laquelle le rail de support présente un fond (12) ayant un profil permettant un encliquetage dans l'ouverture longitudinale d'un autre rail de support.

10. Goulotte de distribution selon l'une quelconque des revendications précédentes, dans laquelle le rail de support est réalisé en métal, de préférence d'aluminium ou en matière plastique, de préférence du PVC.

11. Goulotte de distribution selon l'une quelconque des revendications précédentes, dans laquelle ledit au moins un élément de couvercle est réalisé en métal, de préférence d'aluminium ou en matière plastique, de préférence du PVC.

12. Utilisation d'une goulotte selon l'une quelconque des revendications précédentes, en tant que plinthe horizontale, perche verticale ou boîtier de sol.

## Patentansprüche

1. Stromversorgungskanal, der folgende Bestandteile umfaßt:
- eine Tragschiene (1, 10), die als Kabelführung dient und mit einer sich in Längsrichtung erstreckenden Öffnung versehen ist, die einen Zugang zum Inneren des Kanals ermöglicht,
- wenigstens ein Abdeckelement (2), das auf die sich in Längsrichtung erstreckende Öffnung aufschnappbar ist, um die Schiene zu verschließen,
**gekennzeichnet** durch die Kombination, daß
- die sich in Längsrichtung erstreckende Öffnung der Tragschiene direkt durch Aufschnappen elektrische Einrichtungen, z.B. Steckkontakte aufnimmt, und daß
- die Schiene Halteeinrichtungen (112, 113) umfaßt, die mit dem wenigstens einen aufgeschnappten Abdeckelement (2) zusammenwirken, um eine Vergrößerung der sich in Längsrichtung erstreckenden Öffnung zu verhindern und somit ein versehentliches Herausziehen einer elektrischen Einrichtung (3) aus der sich in Längsrichtung erstreckenden Öffnung durch einen auf diese Einrichtung ausgeübten Zug zu verhindern.

2. Stromversorgungskanal nach Anspruch 1, bei dem die elektrischen Einrichtungen mit Aufschnappeinrichtungen wie z.B. Aufschnappklauen (31) versehen sind, die mit den Halteeinrichtungen (113) der Schiene zusammenwirken, um die elektrischen Einrichtungen (3) durch Aufschnappen in der sich in Längsrichtung erstreckenden Öffnung der Schiene aufzunehmen.

3. Stromversorgungskanal nach Anspruch 1 oder 2, bei dem das wenigstens eine Abdeckelement im wesentlichen die gleiche Größe wie die elektrischen Einrichtungen aufweist.

4. Stromversorgungskanal nach einem der Ansprüche 1 bis 3, bei dem die elektrischen Einrichtungen jeweils eine Vorderfläche (32) aufweisen und die Abdeckelemente jeweils eine Abdeckplatte (21) definieren, wobei die Vorderflächen (32) der elektrischen Einrichtungen und die Abdeckplatten (21) der Abdeckelemente in ein und derselben Ebene angeordnet sind.

5. Stromversorgungskanal nach einem der vorhergehenden Ansprüche, bei dem das wenigstens eine Abdeckelement elastische Aufschnappklauen (22) umfaßt, die mit Aufschnappflanschen (112, 113) zusammenwirken, die mit der Tragschiene verbunden sind.

6. Stromversorgungskanal nach einem der vorhergehenden Ansprüche, bei dem die Halteeinrichtungen Halteflansche (112, 113) umfassen, die mit starren Halteklauen (24) zusammenwirken, die mit dem wenigstens einen Abdeckelement verbunden sind.

7. Stromversorgungskanal nach Anspruch 5 und 6, bei dem die Aufschnappflansche und die Halteflansche die gleichen Flansche sind.

8. Stromversorgungskanal nach Anspruch 7, bei dem die Halteklauen an den Aufschnapp- und Halteflanschen vertikal zur Anlage kommen, um das Eindrücken des wenigstens einen Abdeckelementes in die Tragschiene zu begrenzen.

9. Stromversorgungskanal nach einem der vorhergehenden Ansprüche, bei dem die Tragschiene einen Boden (12) aufweist, der ein Profil besitzt, das ein Aufschnappen auf die sich in Längsrichtung erstreckende Öffnung einer anderen Tragschiene ermöglicht.

10. Stromversorgungskanal nach einem der vorhergehenden Ansprüche, bei dem die Tragschiene aus Metall, vorzugsweise aus Aluminium oder aus einem Kunststoffmaterial, vorzugsweise aus PVC hergestellt ist.

11. Stromversorgungskanal nach einem der vorhergehenden Ansprüche, bei dem das wenigstens eine Abdeckelement aus Metall, vorzugsweise Aluminium, oder Kunststoffmaterial, vorzugsweise aus PVC hergestellt ist.

12. Verwendung eines Stromversorgungskanals nach einem der vorhergehenden Ansprüche als horizontale Sockelleiste, vertikale Stromschiene oder als Erdgehäuse.

## Claims

1. Electricity distribution ducting comprising:
· a support rail (1, 10) for passing cable and provided with a longitudinal opening giving access to the inside of the ducting; and
· at least one cover element (2) that is snap-fastenable in the longitudinal opening so as to close said rail;
the ducting being characterized in that, in combination:
· the longitudinal opening of the support rail receives electrical fittings such as sockets directly by snap-fastening; and
· said rail includes retaining means (112, 113) co-operating with said at least one snap-fastened cover element (2) to prevent the longitudinal opening from widening, thereby preventing an electrical fitting (3) being extracted accidentally from the longitudinal opening by traction being applied thereto.

2. Distribution ducting according to claim 1, in which the electrical fittings are provided with snap-fastening means such as snap-fastening tabs (31) that co-operate with the retaining means (113) of the rail for receiving the electrical fittings (3) in the longitudinal opening of the rail by snap-fastening.

3. Distribution ducting according to claim 1 or 2, in which said at least one cover element has substantially the same width as the electrical fittings.

4. Distribution ducting according to any one of claims 1 to 3, in which each of the electrical fittings has a front face (32) and cover elements each defining a cover plate (21), the front faces (32) of the electrical fittings and the cover plates (21) of the cover elements lying in the same plane.

5. Distribution ducting according to any preceding claim, in which said at least one cover element has resilient snap-fastening tabs (22) co-operating with snap-fastening flanges (112, 113) secured to the support rail.

6. Distribution ducting according to any preceding claim, in which the retaining means comprise retaining flanges (112, 113) co-operating with rigid retaining tabs (24) secured to said at least one cover element.

7. Distribution ducting according to claims 5 and 6, in which the snap-fastening flanges and the retaining flanges are the same.

8. Distribution ducting according to claim 7, in which the retaining tabs come into abutment vertically on the snap-fastening and retaining flanges to limit the extent to which said at least one cover element can be pushed into said support rail.

9. Distribution ducting according to any preceding claim, in which the support rail has a web (12) presenting a profile that enables snap-fastening in the longitudinal opening of another support rail.

10. Distribution ducting according to any preceding claim, in which the support rail is made of metal, preferably aluminum, or of a plastics material, preferably PVC.

11. Distribution ducting according to any preceding claim, in which said at least one cover element is made of metal, preferably aluminum, or of a plastics material, preferably PVC.

12. The use of ducting according to any preceding claim, as horizontal skirting board, as a vertical post, or as a ground box.
